# EUROPEAN PATENT SPECIFICATION

(11) **EP 2 200 213 B1**
(45) Date of publication and mention of the grant of the patent: **23.05.2012**
(21) Application number: 09178647.5
(22) Date of filing: 10.12.2009
(51) Int. Cl.: H04L 27/26, H04N 5/44, H04N 7/24

(54) **Method of transmitting and receiving a signal and apparatus for transmitting and receiving a signal**
Verfahren und Vorrichtung zum Senden und Empfangen eines Signals
Procédé de transmission et de réception d'un signal et appareil de transmission et de réception d'un signal

(30) Priority: 11.12.2008 US 121900 P; 04.02.2009 US 149996 P
(43) Date of publication of application: 23.06.2010
(73) Proprietor: LG ELECTRONICS INC., Yeongdeungpo-gu Seoul 150-721 (KR)
(72) Inventor: Hong, Ho Taek, 137-724, Seoul (KR); Ko, Woo Suk, 137-724, Seoul (KR); Kim, Jin Pil, 137-724, Seoul (KR); Lee, Joon Hui, 137-724, Seoul (KR); Song, Jae Hyung, 137-724, Seoul (KR); Kim, Kyung Ho, 137-724, Seoul (KR); Suh, Jong Yeul, 137-724, Seoul (KR); Moon, Sang Chul, 137-724, Seoul (KR)
(74) Representative: Verdure, Stéphane

(56) References cited:
- WO-A1-2007/073094
- WO-A1-2007/083940
- US-A1- 2008 225 996
- DVB PROJECT: "Frame structure channel coding and modulation for a second generation digital terrestrial television broadcasting system (DVB-T2)" INTERNET CITATION vol. june 2008, 30 June 2008 (2008-06-30), pages 1-158, XP002546005 Retrieved from the Internet: URL:http://www.dvb.org/technology/dvbt2/a1 22.tm3980r5.DVB-T2.pdf [retrieved on 2009-09-15]
- HAKJU LEE: "L1 Signaling" DTG PUBLICATIONS,, [Online] 17 November 2008 (2008-11-17), pages 1-9, XP002546742 Retrieved from the Internet: URL:www.dtg.org.uk/dtg/t2docs/L1%20signali ng_Hakju_Lee_Samsung.pdf>
- KAROL M J ET AL: "Performance advantages of time-frequency-sliced systems" PERSONAL, INDOOR AND MOBILE RADIO COMMUNICATIONS 1995 PIMRC ' 95, IEEE, US LNKD- DOI:10.1109/PIMRC.1995.477319, vol. 3, 27 September 1995 (1995-09-27), pages 1104-1111, XP009106818 ISBN: 978-0-7803-3002-3
- "Digital Video Broadcasting (DVB); Frame structure channel coding and modulation for a second generation digital transmission system for cable systems (DVB-C2)" EUROPEAN STANDARD (TELECOMMUNICATIONS SERIES), EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V1.1.1, 1 July 2009 (2009-07-01), XP014044394

## Description

### BACKGROUND OF THE INVENTION

### Field of the Invention

The present invention relates to a method of transmitting and receiving a signal and an apparatus for transmitting and receiving a signal.

### Description of the Related Art

The present invention relates to a broadcasting method using data slice and Physical Layer Pipe (PLP) that are configured by applying a channel bonding technique in digital cable broadcasting, and to a method for efficiently mapping and signaling interlayer signals which minimizes change by a new structure, called PLP & data slice, by maximally using a signaling structure that connects layers such as the existing network, service, and package.

A current digital TV broadcasting transmission technology is progressing for the purpose of deriving the maximum efficiency in the same frequency band out of an issue that converts an analog signal into a digital signal. Accordingly, from the existing Digital Video Broadcasting-Satellite (DVB-S) and Digital Video Broadcasting-Terrestrial (DVB-T), Europe defines a transmission standard called DVB-S2/T2, and improves a transmission rate by 30% to 50% relative to the existing scheme through the transmission standard. These are being practically applied.

In accordance with such a background, cable broadcasting also proposes new requirements that have been further advanced than the existing Digital Video Broadcasting-Cable (DVB-C). Particularly, because of characteristic in which there is much retransmission from terrestrial broadcasting or satellite broadcasting, the requirements of DVB-C2 has been defined for increasing transmission efficiency while maximally reusing the structure of DVB-S2/T2. DVB-C2 standardization for implementing this is in progress.

As the feature of the DVB-C2, a concept has been introduced that integrates and uses adjacent Radio Frequency (RF) bands through a channel bonding scheme while maximally applying the transmission structure of the existing DVB S2/T2, thereby minimizing waste by a guard frequency. Accordingly, the importance of a channel having identical band becomes lower. This is replaced by a concept, called the data slice of a variable bandwidth.

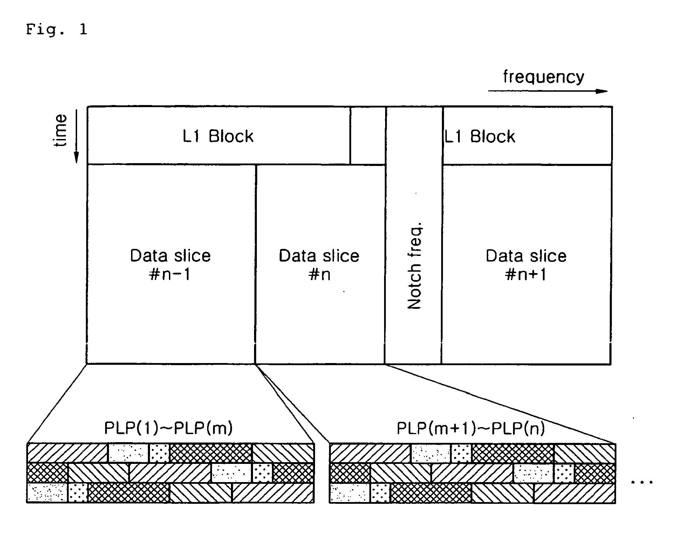

Referring to Fig. 1, a data slice having a variable frequency width on a frequency band is seen, and several PLPs are included in the data slice and transmitted (the concept of the PLP has been proposed in DVB-T2). A notch frequency being a band in which it is impossible to receive a signal may be inserted in the middle.

The configuration information of the data slice can be obtained by Layer 1 (L1) signaling that has the same information at anywhere within a DVB-C2 transmission band, but detailed content has not been defined. Accordingly, when a receiver intends to receive such a type of "data slice + PLP" structure, a method of obtaining a desired stream through the data slice and PLP, and a signaling method of connecting a desired stream to a service/service package need to be defined.

### SUMMARY OF THE INVENTION

Embodiments provide a method of transmitting and receiving a signal and an apparatus for transmitting and receiving a signal capable of efficiently mapping and signaling interlayer signals which minimizes change by a new structure, called PLP & data slice, by maximally using a signaling structure that connects layers such as the existing network, service, and package.

Accordingly, the present invention is directed to a method of transmitting and receiving a signal and an apparatus for transmitting and receiving a signal that substantially obviate one or more problems due to limitations and disadvantages of the related art.

An aspect of the present invention provides a method of receiving a broadcasting signal according to claim 1.

Another aspect of the present invention provides an apparatus for receiving a broadcasting signal according to claim 5.

Yet another aspect of the present invention provides a method of transmitting a broadcasting signal according to claim 9.

Yet another aspect of the present invention provides an apparatus for transmitting broadcasting signal according to claim 13.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.

Fig. 1 shows structure of data slice and Physical Layer Pipe (PLP).

Fig. 2 is a conceptual diagram showing relationship between Physical Layer Pipes (PLPs) and services.

Fig. 3 shows an example of mapping PLP and service.

Fig. 4 shows an example of NIT with detailed syntax.

Fig. 5 shows an example of C2 delivery system descriptor (C2dsd) with detailed syntax.

Fig. 6 shows an example of mapping PLP and service package.

Fig. 7 shows an example of signaling format for the bandwidth.

Fig. 8 shows an example of modulation scheme for cable.

Fig. 9 shows an example of signaling format for each of the guard interval values.

Fig. 10 shows an example of signaling format for transmission mode/FFT size.

Fig. 11 shows another example of C2 delivery system descriptor (C2dsd) with detailed syntax.

Fig. 12 shows an example of signaling format for the active OFDM symbol duration values.

Fig. 13 shows an example of signaling format for the guard interval values.

Fig. 14 is a flow chart illustrating a method of receiving a signal in broadcasting system.

Fig. 15 shows an apparatus for receiving broadcasting signal according to an embodiment of the present invention.

Fig. 16 shows an apparatus for transmitting broadcasting signal according to another embodiment of the present invention.

Fig. 17 is a flow chart illustrating a method of transmitting broadcasting signal according to another embodiment of the present invention.

Fig. 18 shows an apparatus for receiving broadcasting signal according to another embodiment of the present invention.

Fig. 19 is a flow chart illustrating a method of receiving broadcasting signal according to another embodiment of the present invention.

### DESCRIPTION OF THE PREFERRED EMBODIMENTS

References will now be made in detail to the preferred embodiments of the present invention, examples of which are illustrated in the accompanying drawings.

In the following description, the term "service" is indicative of either broadcast contents which can be transmitted/received by the signal transmission/reception apparatus.

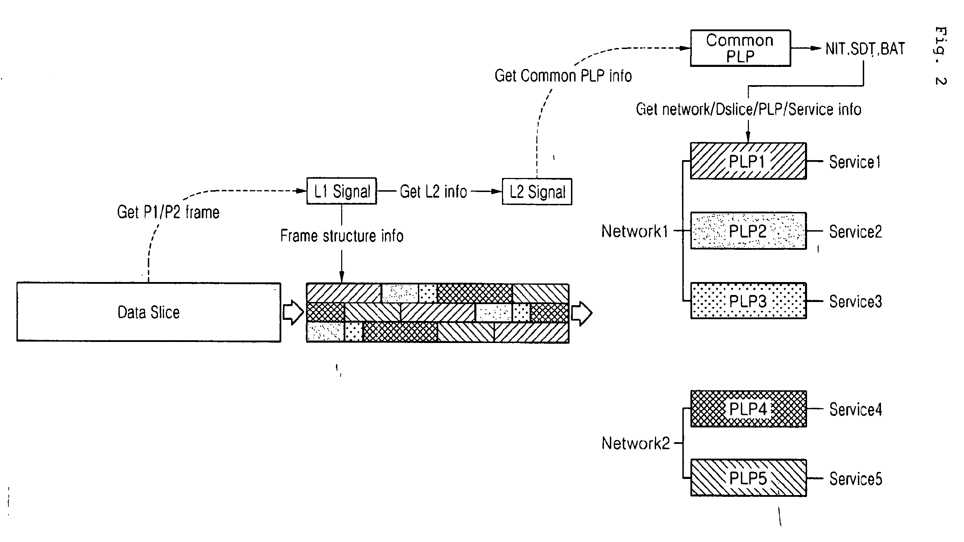

Fig. 2 is a conceptual diagram showing relationship between Physical Layer Pipes (PLPs) and services.

In a case of using a transmission scheme adopting a PLP, a Layer-1 (L1) signaling is received when tuning an arbitrary RF channel. Consequently, a data slice having several PLPs - in a corresponding region is received (the left portion in Fig. 2). The data slice may have a preamble including a first pilot signal (P1) and a second pilot signal (P2).

At this point, a signaling portion that identically signals the entire configuration of a data slice in all reception regions is called L1 signaling data, which include information that includes the number of data slices, width of each data slice, a PLP configuration included in each data slice, and Layer-2 (L2) signaling data including a common PLP. Based on this, by checking the configuration of a c2 system (for example, data slice + PLP), PLPs can be divided (the center portion in Fig. 2).

A common PLP (or the signaling information of a PLP) may be extracted from L2 signaling data, wherein the common PLP includes Program Specific Information/Service Information (PSI/SI) data (for example, Network Information Table (NIT), Service Description Table (SDT), and Bouquet Association Table (BAT)). From this, Network/Data slice/PLP/Service information can be obtained. Then, an apparatus for receiving broadcasting signal provides basic information for service tuning. Through this, mapping information of PLP to network, service, and package (i.e., bouquet) is provided (the right portion in Fig. 2).

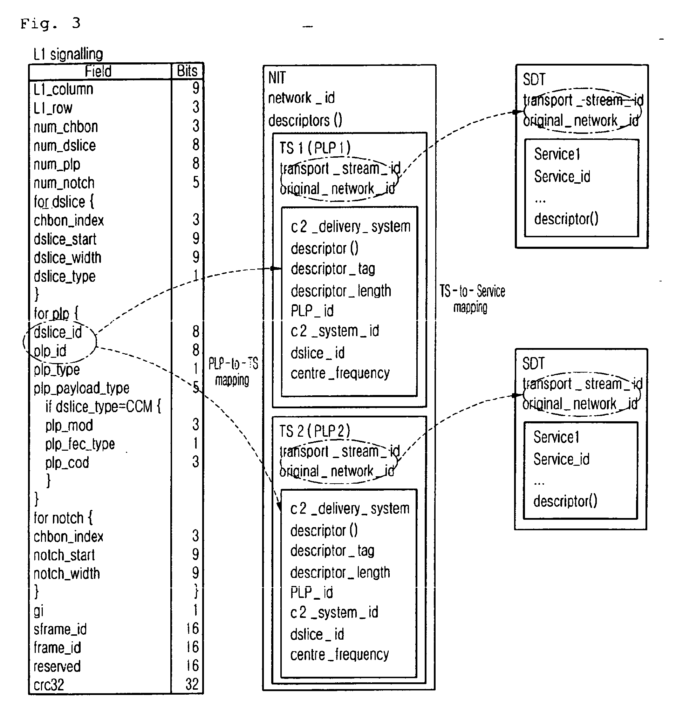

Fig. 3 shows an example of mapping PLP and service.

A configuration of a data slice and a PLP included in the data slice is transmitted to a receiver through L1 signaling as shown in the first portion of Fig. 3. L1 signaling data provide information comprising the total number and bands of data slices, the number of PLPs and PLP structure information included in each data slice, and L2 signaling information including PSI/Sl.

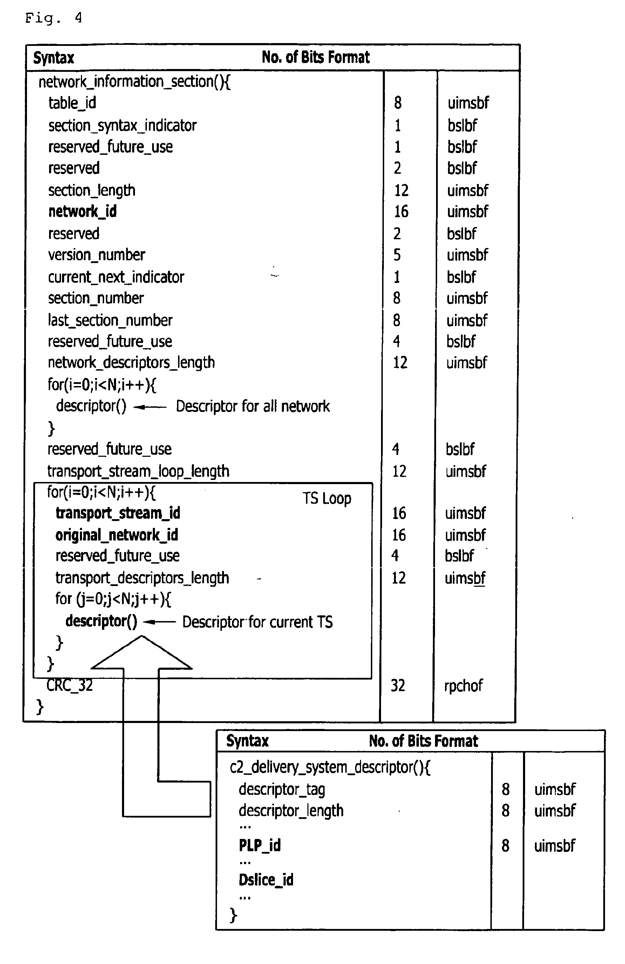

The L2 signaling or Network Information Table (NIT) included in a service PLP informs network information on several Transport Streams that is transmitted through C2 system (the center portion in Fig. 3). The detailed structure of the NIT may be seen in Fig. 4.

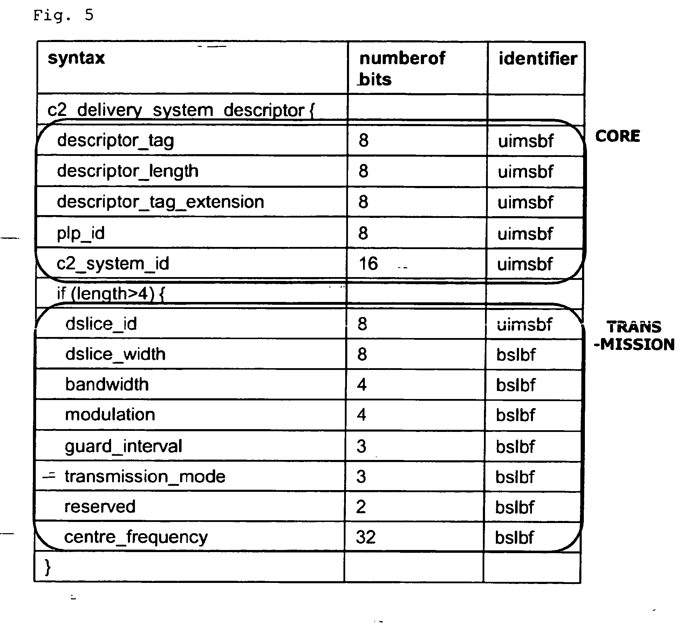

NIT is configured with several Transport Stream (TS) information loops. In the present invention, a C2 delivery system descriptor (hereinafter referred to as a C2dsd, see Fig. 5)" is defined to be attached to the descriptor loop of the TS. Then, the NIT is configured to inform through which PLP of some data slice the TS of a corresponding loop is transmitted. That is, a PLP corresponding to an identifier of PLP (plp_id) in the c2dsd is transmitted in a data slice corresponding to an identifier of data slice (dslice_id) in the C2dsd. This is a structure capable of knowing that the corresponding TS is transmitted through the PLP.

In the TS loop, the identifier of a TS (transport_stream_id) and the identifier of a network (original_network_id) uniquely divides a corresponding TS. Broadcasting service provided through the TS is signaled through Service Description Table (SDT). At this point, the transport_stream_id and original_network_id of the NIT are connected to the transport_stream_id and original_network_id pair of the SDT, and inform through which TS a service list represented as the identifier of a service (service_id) of the SDT is provided (the NIT-SDT connection of a center-right portion in Fig. 3).

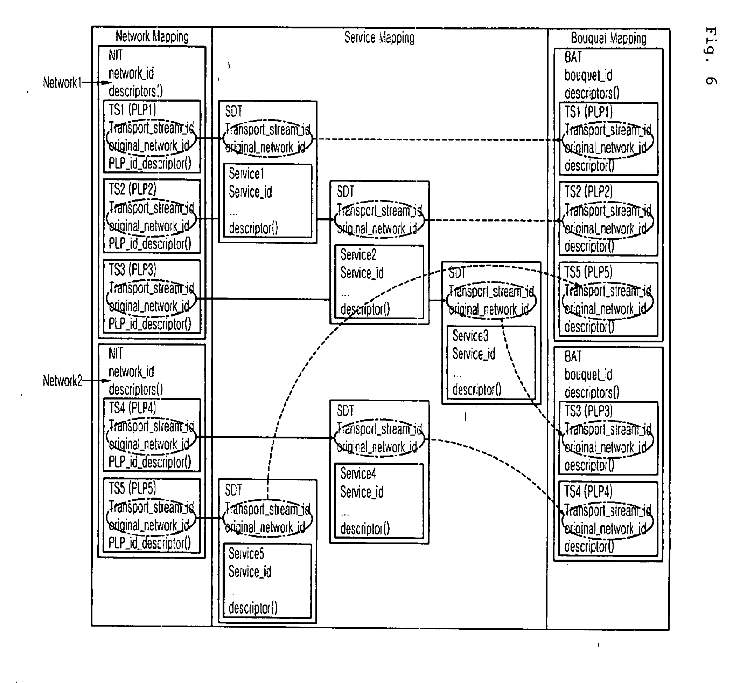

Fig. 6 illustrates that a network, service and package (i.e., bouquet) are connected to the PLP in the same scheme. As described referring to Fig. 3, the TS is connected to a specific PLP by using the plp_id of the C2dsd. The connection between a identifier of a network (network_id) and the TS, and the connection between the identifier of a bouquet (bouquet_id) of the BAT and the TS are implemented with respect to the TS identically to the existing PSI/SI (such as conventional DVB-SI). In this way, by introducing the C2dsd into the NIT, the PLP is connected to a network, service, and package through the minimum change, thereby improving PSI/SI compatibility.

Fig. 4 shows the detailed syntax of the NIT, and Fig. 5 shows the detailed syntax of the C2dsd. Referring to Fig. 4, the NIT has the syntax of the existing SI as-is, and the C2dsd is included in a descriptor loop in a TS loop and is thereby transmitted. Through this, the transport_stream_id of the TS loop is matched with the plp_id and dslice_id of the C2dsd.

The C2dsd of Fig. 5 is configured as follows.

- descriptor_tag: This informs which a descriptor is, and has a unique value. However, because a dvb descriptor list representable with 8 bits is full, this value defines 0x7F and uses a descriptor_tag_extension (see extension descriptor: ETSI EN 300 468 chap.6.3 Extended descriptor identification and location).

- descriptor_length: This informs the entire length of a descriptor.

- descriptor_tag_extension: This informs the kind of a descriptor. A reserved value such as 0x07 may be.arbitrarily used for the c2dsd (0x00 to 0x06 are preset).

- PLP_id: This represents the identifier of a PLP to which a stream represented by a transport_stream_id in the TS loop of the NIT including a descriptor is transmitted. That is, a PLP_id uniquely identifies a data PLP within a C2 system.

- c2_system_id: This is an identifier of a C2 system that represents one independent c2 transmission network. An identifier of a data slice (dslice_id) and an identifier of a plp (plp_id) are uniquely defined in the identifier of a C2 system (c2_system_id). That is, a C2_system_id uniquely identifies a C2 system.

Hereto, 6 bytes are compatible_because they are the same as the t2dsd of DVB-T2, and may be reused in retransmission.

- dslice_id: This informs to which data slice the PLP of a corresponding plp_id is transmitted. That is, a dslice_id uniquely identifies a data slice within a C2 system.

- dslice_width: This informs a bandwidth over which the data slice of a corresponding dslice_id is transmitted. This may be represented by the number of carrier, and may have the number of carrier as dslice_width x 12.

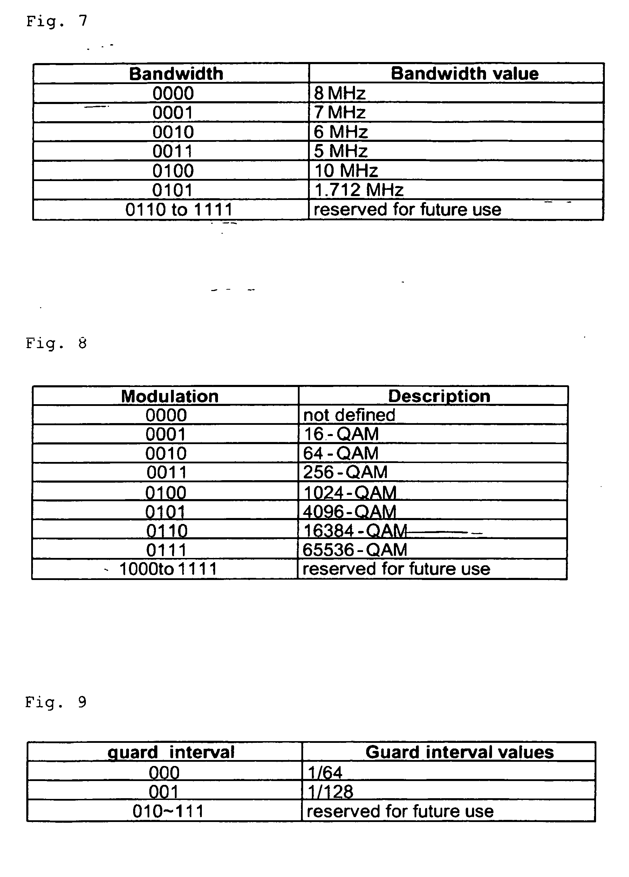

- Bandwidth: This informs a bandwidth that is used in a system (See Fig. 7). Fig. 7 shows an example of signaling format for the bandwidth.

- Modulation: This informs a cable modulation scheme. As illustrated in Fig. 8, there are the options of 16-QAM to 65536-QAM. Fig. 8 shows an example of modulation scheme for cable.

- guard_interval: This informs a guard interval (See Fig. 9). Fig. 9 shows an example of signaling format for each of the guard interval values.

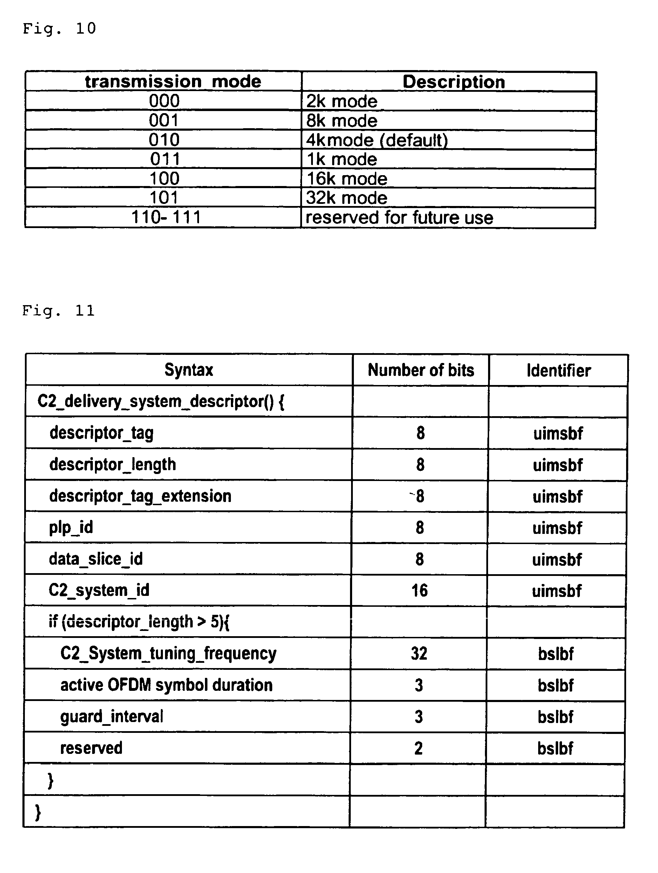

- transmission_mode: This informs the FFT size of a transmission signal. A 4k mode is a default (See Fig. 10). Fig. 10 shows an example of signaling format for transmission mode/FFT size.

- centre_frequency: This informs the representative frequency of a corresponding dslice_id. In the case of DVB-C, the centre_frequency is a value that is coded through 4-bit BCD coding and uses MHz as a unit, if necessary, it may be redefined.

In addition, when signaling for another parameter is required, continuously adding below may be performed.

Then, as another embodiment of the present invention, the C2dsd can be defined as described in Fig. 11. Fig. 11 shows another example of the C2dsd with detailed syntax.

The C2dsd of Fig. 11 is configured as follows.

- descriptor_tag: This 8-bit field informs which a descriptor is, and has a unique value. However, because a dvb descriptor list representable with 8 bits is full, this value defines 0x7F and uses a descriptor_tag_extension.

- descriptor_length: This 8-bit field informs the entire length of a descriptor.

- descriptor_tag_extension: This 8-bit field informs the kind of a descriptor.

- PLP_id: This 8-bit field uniquely identifies a data PLP within a C2 system. This represents the ID of a PLP to which a stream represented by a transport_stream_id in the TS loop of the NIT including a descriptor is transmitted.

- data_slice_id: This 8-bit field uniquely identifies a data slice within a C2 system. This informs to which data slice the PLP of a corresponding plp_id is transmitted.

- c2_system_id: This 16-bit field uniquely identifies a C2 system. This represents one independent C2 transmission network. A data_slice_id and a plp_id are uniquely defined in the c2_system_id.

- c2_system_tuning_frequency: This 32-bit field indicates the frequency value. The coding range is from minimum 1 Hz (0x00000001) up to a maximum of 4,294,967,295 Hz (0xFFFFFFFF) This data field gives a tuning frequency of a C2 system, where a complete preamble is transmitted within the tuning window. Generally the c2_system_tuning_frequency is the center frequency of a C2 system, but it may deviate from the center frequency in case notches exist in this area.

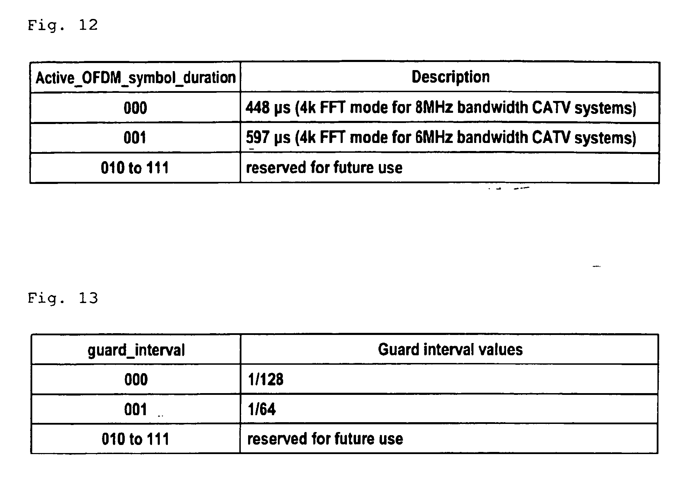

- Active_OFDM_symbol_duration: This 3-bit field indicates the duration of the active Orthogonal Frequency Division Multiplexing (OFDM) symbol and may be described as Fig. 12. Fig. 12 shows an example of signaling format for the active OFDM symbol duration values. The duration of the active OFDM symbol may be 448 µm at 4k FFT mode for 8 MHz bandwidth systems. The duration of the active OFDM symbol may be 597 µm at 4k FFT mode for 6 MHz bandwidth systems. And, the duration of the active OFDM symbol for 6MHz bandwidth systems may be denoted as 448 x (8/6) µs or 597.33 µs more precisely

- guard_interval: This 3-bit field indicates the guard interval and may be described as Fig. 13. Fig. 13 shows an example of signaling format for the guard interval values. The guard interval value may be 1/128 or 1/64.

In the C2dsd described in Fig. 11, the fields from c2_system_tuing_frequency field to reserved field, immediately following the c2_system_id field, may occur only once per C2 system. Because the parameters are uniquely applicable to all data slices carried over a particular C2 system. The presence or absence of that part can be derived from the descriptor_length field. For example; in the absence of the fields from c2_system_tuing_frequency field to reserved field, the descriptor_length may be 0x07, otherwise a larger value applies.

Next, as another embodiment of the present invention, the C2dsd can be defined except an identifier of a data slice (data_slice_id) from the descriptor shown in Fig. 11. As described above, the configuration information of the data slice can be obtained by Layer 1 (L1) signaling that has the same information at anywhere within a DVB-C2 transmission band. L1 signaling data provide information comprising the total number and bands of data slices, the number of PLPs and PLP structure information included in each data slice. That is, data slice related information corresponding to the PLP is provided via and derived from Layer 1 signaling. Therefore, an identifier of data slice can be omitted in the C2dsd when the identifier of the data slice corresponding to the identifier of the PLP is provided via and derived from Layer 1 signaling.

Accordingly, the C2 delivery system descriptor (C2dsd) can be defined with descriptor tag, descriptor_length, description_tag_extension, plp_id, and c2_system_id fields. The C2dsd maps a Transport Stream being signaled with the NIT, and heading the TS descriptor loop, to the corresponding C2 system (C2_system_id) and the PLP (plp_id) that carries this Transport Stream within the C2 system. That is, the C2 delivery system descriptor (C2dsd) in the TS loop of the NIT maps transport streams to data PLPs in data systems. And the C2dsd may further comprise c2_system_tuning_frequency field, active_OFDM_symbol_duration field described in Fig. 12, and guard_interval field described in Fig. 13.

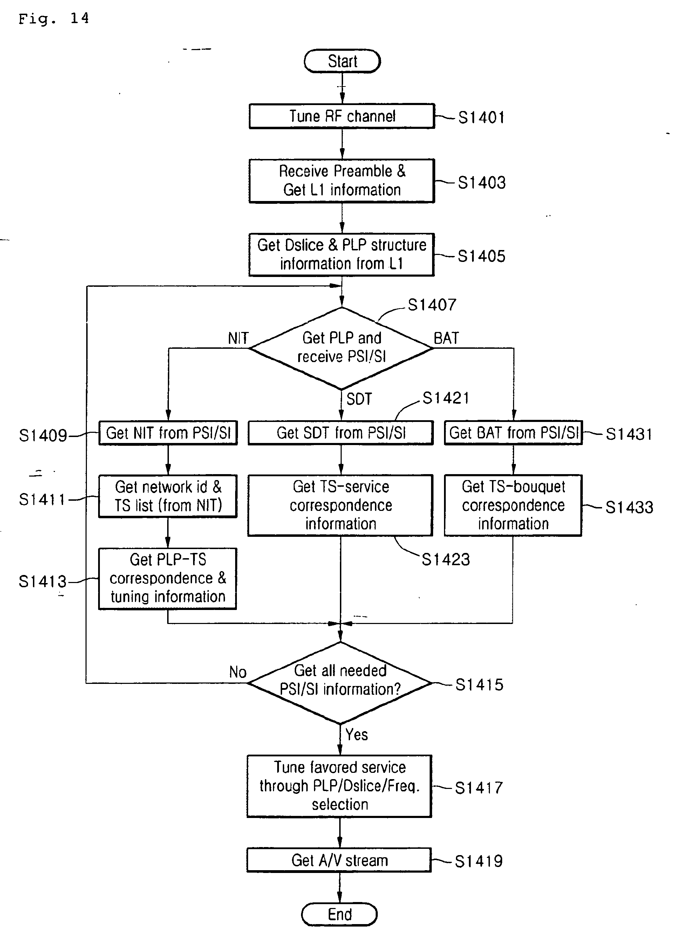

Fig. 14 is a flow chart illustrating a method of receiving a signal in broadcasting system to which the present invention is applied.

First, referring to Fig. 14, when a tuner tunes a channel, a preamble signal is inputted (S1401 and S1403). A receiver receives L1 signaling data that are identically transmitted irrespective of a tuning frequency as shown in Figs. 1 and 2.

Then, from the L1 signaling data, the structure of the entire data slice, the structure of PLPs included in each data slice, and L2 signaling data information are obtained (S1405).

A PLP including L2 signaling data is received. Herein, PSI/SI information such as NIT, SDT, and BAT is included (S1407).

When the NIT is received, the receiver checks an identifier of a network (network_id). Then, the receiver analyzes a TS loop to check the plp_id/dslice_id connection information of the C2dsd and transport_stream_id of each TS. Through this, a network-TS-PLP-data slice connection structure and tuning information are obtained (S1409, S1411, and S1413).

When the SDT is received, the receiver checks a TS-service connection structure through original_network_id and transport_stream_id as shown Fig. 6 (S1421 and S1423).

When the BAT is received, the receiver checks a TS-package (i.e., bouquet) connection structure through original_network_id and Uansport_stream id as shown Fig. 6 (S1431 and S1433).

When all necessary PSI/SI information is obtained, the receiver finds a transport_stream_id, corresponding to the service_id of desired service, in the SDT and finds a PLP and data slice to which corresponding TS is transmitted in the c2dsd of the NIT to perform tuning (S1415).

When being tuned to a corresponding data slice, the receiver decodes the TS of a desired transport_stream id through the PLP of a corresponding plp_id. The receiver starts AN streams decoding and provides service (S1417 and S1419).

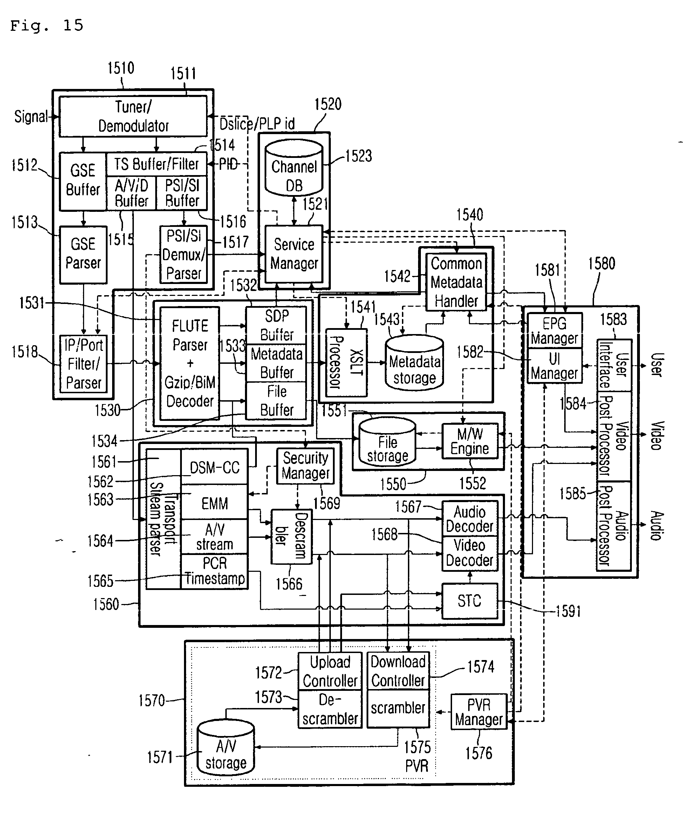

Fig. 15 shows an apparatus for receiving broadcasting signal according to an embodiment of the present invention.

Referring to Fig. 15, the receiver of this embodiment includes a frontend unit 1510, service managing unit 1520, File Delivery over Unidirectional Transport (FLUTE) processing unit 1530, metadata processing unit 1540, Middleware (M/W) processing unit 1550, Audio/Video (A/V) processing unit 1560, Personal Video Recorder (PVR) processing unit 1570, and Input/Output (I/O) processing unit 1580.

The frontend unit 1510 includes a tuner/demodulator 1511, GSE buffer 1512, GSE parser 1513, TS buffer/filter 1514, Audio/Video/Data (A/V/D) buffer 1515, PSI/SI buffer 1516, PSI/SI demux/parser 1517, and IP/Port filter/parser 1518. The frontend unit 1510 receives a broadcasting signal and decodes the received signal in an appropriate type according to a transmission scheme to output a Generic Stream Encapsulation (GSE) or Transport Stream (TS) packet.

The tuner/demodulator 1511 receives a broadcasting signal and outputs the received signal in a stream type. In the case of DVB-C2, GSE or TS is outputted. The GSE buffer 1512 buffers and the GSE parser 1513 decodes GSE stream to output it as an IP packet. The TS buffer/filter 1514 buffers and filters TS stream. The Audio/Video/Data buffer 1515 buffers data other than PSI/SI among TS streams and transmits the buffered data to a transport stream parser 1560. The PSI/SI buffer 1516 buffers a PSI/SI signal in the TS stream and the PSI/SI demux/parser 1517 decodes the buffered signal to transfer the decoded signal to a service manager 1521. The IP/Port filter/parser 1518 filters a packet corresponding to a specific IP/Port according to the service access information request of the service manager 1521. At this point, an IP packet that is decoded for each address according to the control of the service manager 1521 is transferred to the FLUTE processing unit 1530.

The service managing unit 1520 includes the service manager 1521 and a channel Database (DB) 1523. The service managing unit 1520 manages overall system control for service provided by a service provider.

The service manager 1521 manages total services according to the service list and access information that are transferred as metadata. Main functions of the service manager 1521 are as follows.

- The service manager 1521 processes tuner control information such as data slice and PLP, which are transferred in PSI/SI.

- The service manager 1521 processes service access information that is transferred from an SDP parser 1532.

- The service manager 1521 provides the filtering information at the IP/Port filter/parser 1518 according to the service access information. At this point, the service manager 1521 also controls to which processing part an IP packet outputted according to filtering should be transferred (FLUTE, security or A/V).

- The service manager 1521 signals by which Extensible Stylesheet Language Transformations (XSLT) logic processing should be performed when converting metadata by system into a common metadata scheme.

- The service manager 1521 requests, receives and processes all sorts of information of service necessary for a common metadata handler 1542, and selects and stores only information necessary for the channel database (DB) 1523.

- The service manager 1521 processes service-related operations (for example, an operation of changing a channel) necessary in an Electronic Program Guide (EPG) operation.

The channel database 1523 stores service management/change/access-related contents among service-related information for the efficient operation of the service manager 1521, and the contents are frequently inputted and outputted.

The FLUTE processing unit 1530 includes a FLUTE parser and Gzip/BiM decoder 1531, Session Description Protocol (SDP) parser 1532, metadata buffer 1533, and file buffer 1534. The FLUTE processing unit 1530 decodes a file that is encoded according to a FLUTE protocol and transfers the decoded file to a corresponding processing part according to each content format.

The FLUTE parser and Gzip/BiM decoder 1531 decodes a file that is encoded based on the FLUTE protocol, and at this point, performs decompressing according to a compressed scheme to output a file. The content type of the outputted file may be checked on the basis of the File Description Table (FDT) content of the FLUTE protocol. Accordingly, each file is transmitted to the SDP parser 1532, the metadata buffer 1533, or the file buffer 1534 based on the content type. The SDP parser 1532 decodes an SDP file which is the file representing access information and transfers the decoded result to the service manager 1521.

The metadata buffer 1533 buffers metadata which is a kind of Extended Markup Language (XML) file representing overall information associated with service and content. The metadata buffer 1533 also transfers the buffered metadata to an XSLT processor 1541 for converting the metadata into a common metadata format. The file buffer 1534 buffers various files that are used in a middleware, and stores the buffered files in a file storage 1551 of the middleware processing unit 1550. These files may be used by a middleware (M/W) engine 1552. The file buffer 1534 may buffer the files together with a file that is transmitted through a Digital Storage Media Command and Control (DSM-CC) part 1562 of a Transport Stream (TS) parser 1561.

The metadata processing unit 1540 includes the XSLT processor 1541, common metadata handler 1542, and metadata storage 1543. The metadata processing unit 1540 converts metadata that is transferred from the FLUTE processing unit 1530 into a common metadata format being a common format, stores the converted metadata. The metadata processing unit 1540 searches relevant content, and provides the searched result according to the request of each part.

The XSLT processor 1541 converts a metadata into a common metadata by using XSLT based on each transmission scheme, wherein the metadata can be different from each other according to each transmission scheme. The metadata storage 1543 stores the common metadata, and performs search to transfer the searched result according to the request of the common metadata handler 1542. The common metadata handler 1542 searches metadata according to various information requests associated with service, event and access information, and transfers the searched result to the service manager 1521, an EPG manager 1581, and a security manager 1569. The common metadata handler 1542 may store the metadata in connection with PVR data according to the request of a PVR manager 1576.

The middleware processing unit 1550 includes a file storage 1551 and the middleware (M/W) engine 1552. The middleware processing unit 1550 loads a file that is transferred from the FLUTE processing unit 1530 to drive and execute an appropriate application.

The file storage 1551 stores all sorts of files to be used in the middleware engine 1552, and transmits a necessary file according to a request of the middleware engine 1552. The middleware engine 1552 drives middleware such as Advanced Common Application Platform (ACAP), Open Cable Application Platform (OCAP), Multimedia Home Platform (MHP), and Multimedia and Hypermedia information coding Experts Group (MHEG), and receives a necessary file from the file storage 1551 to display a driven application on a screen through a video post processor 1584.

The audio/video (A/V) processing unit 1560 includes the transport stream parser 1561, a descrambler 1566, an audio decoder 1567, a video decoder 1568, the security manager 1569, and a System Time Clock (STC) part 1591. The audio/video processing unit 1560 decodes an A/V stream, processes a scramble, and displays it on a screen to be synchronized.

The transport stream (TS) parser 1561 includes the DSM-CC part 1562, an Entitlement Management Message (EMM) part 1563, an AN stream part 1564, and a PCR timestamp part 1565. The transport stream parser 1561 parses a stream that is inputted in the TS type of an MPEG-2 system to divide the stream into an audio stream, a video stream, a data stream, and timing information according to stream types. The DSM-CC part 1562 parses a DSM-CC data stream. The EMM part 1563 parses an entitlement management message which is a Conditional Access System (CAS)-related signal. The AN stream part 1564 parses an audio/video stream. The PCR timestamp part 1565 parses a PCR signal.

The descrambler 1566 descrambles a scrambled stream based on a scramble key value and necessary parameters transmitted from the security manager 1569. The security manager 1569 manages security information associated with CAS such as Conditional Access Table (CAT) among PSI/SI, and transmits descramble information to the descrambler 1566. The audio decoder 1567 decodes an audio stream and the video decoder 1568 decodes a video stream. The System Time Clock (STC) part 1591 provides a reference clock for synchronizing according to a timestamp in A/V stream decoding, and also provides a reference clock for matching a replay speed with a transmitted stream. The STC part 1591 is synchronized with the clock of a server using clock recovery information received from the PCR timestamp part 1565 of the TS parser 1561. In a PVR replay, the STC part 1591 receives a clock from an upload controller 1572.

The PVR processing unit 1570 includes an Audio/Video (AN) storage 1571, the upload controller 1572, a descrambler 1573, a download controller 1574, a scrambler 1575, and the PVR manager 1576. The PVR processing unit 1570 is a part associated with a PVR (or DVR)-related function, i.e., the storage and replay of a stream.

The PVR manager 1576 controls PVR-related operations. That is, the PVR - manager 1576 controls the download controller 1574 and upload controller of the PVR processing unit 1570, i.e., controls storage, replay and reserve record. The PVR manager 1576 communicates with the middleware engine 1552 for data broadcasting record. The PVR manager 1576 communicates with a User Interface (UI) manager 1582 for PVR UI. The PVR manager 1576 is connected to the common metadata handler 1542 for storing metadata connected to stored content. The download controller 1574 adds information such as a timestamp and a random access point to an AN stream in stream record, and stores it. The scrambler 1575 performs scrambling for protecting content in stream record. The AN storage 1571 stores an A/V stream. The descrambler 1573 performs descrambling for replay, to the scrambled content that has been scrambled for protecting the content. The upload controller 1572 transmits information such as the timestamp and the random access point to the STC 1591 and PVR manager 1576, and transmits a stream to the Audio decoder 1567 and video decoder 1568.

The I/O processing unit 1580 includes the EPG manager 1581, UI manager 1582, user interface 1583, video post processor 1584, and audio post processor 1585. The I/O processing unit 1580 is related to a user input and an AN output.

The EPG manager 1581 receives metadata associated with the display of an EPG from the common metadata handler 1542, processes the metadata in an appropriate format, and blends the processed metadata with a video stream or a middleware application through the UI manager 1582 to display the blended data on a screen. The UI manager 1582 interprets a user's input and requests necessary operations in connection with the service manager 1521, EPG manager 1581, and PVR manager 1576. The user interface 1583 transmits a user's input to a system through the UI manager 1582. The video post processor 1584 blends a video stream, a middleware application, an EPG, and all sorts of UI widgets to display the blended result on a screen. The audio post processor 1585 outputs an audio stream as sound in connection with function such as volume control and mute.

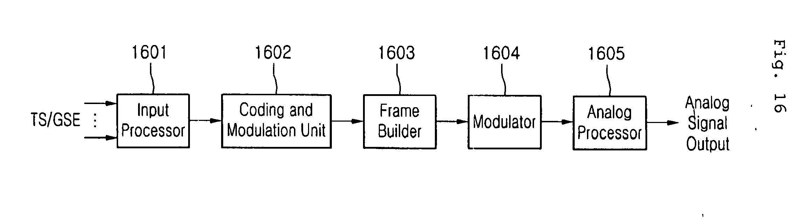

Fig. 16 shows an apparatus for transmitting broadcasting signal according to another embodiment of the present invention.

Referring to Fig. 16, the transmitter according to this embodiment includes an input processor 1601, a coding and modulation unit 1602, a frame builder 1603, a modulator 1604, and an analog processor 1605.

Inputs may comprise a number of MPEG-TS streams or Generic Stream Encapsulation (GSE) streams. The input processor 1601 may add transmission parameters to input stream and perform scheduling for the coding and modulation unit 1602.

The coding and modulation unit 1602 may add redundancy and interleave data for transmission channel error correction. That is, the coding and modulation unit 1602 may be configured to encode a transport stream using an error-correction encoding scheme and interleave bits of the error-correction-encoded transport stream. For example, the coding and modulation unit 1602 may be a Bit Interleaved Coding and Modulation (BICM) unit.

The frame builder 1603 may build frames by adding physical layer signaling information and pilots. That is, the frame builder 1603 may be configured to map the interleaved bits of the transport stream to symbols of a physical layer pipe (PLP). The frame builder 1603 may be configured to allocate the symbols of the PLP to a signal frame, and arrange layer-2 information including a network information table (NIT) having an identifier of a physical layer pipe (PLP_id) and an identifier of a C2 system (C2_system_id) corresponding to the transport stream in the signal frame.

The modulator 1604 may perform modulation on input symbols in efficient methods. For example, the modulator 1604 may be configured to modulate the signal frame by an Orthogonal Frequency Division Multiplexing (OFDM) method.

The analog processor 1605 may perform various processes for converting input digital signals into output analog signals.

In the example of the present invention, a C2 delivery system descriptor (C2dsd) including the identifier of a physical layer pipe (PLP_id) and an identifier of a C2 system (C2_system_id) in a TS loop of the NIT maps a transport stream to the data PLP in a data slice of the C2 system. In the example, PLP related information corresponding to the data slice can be provided via and derived from layer-1 signaling.

That is, as described above, the C2 delivery system descriptor (C2dsd) maps a transport stream being signaled with the NIT, and heading the TS descriptor loop, to the corresponding C2 system (C2_system_id) and the PLP (PLP_id) that carries this transport stream within the C2 system. And, data slice related information in the C2 system is provided via and derived from layer-1 signaling.

As described above, the C2 delivery system descriptor (C2dsd) may comprise the descriptor_tag, descriptor_length, descriptor_tag_extension, plp_id, and C2_system_id fields. The C2 delivery system descriptor (C2dsd) may further comprises a tuning frequency of C2 system, duration of the active OFDM symbol (active_OFDM_symbol_duration), and guard interval (guard_interval) fields.

In this example, the duration of the active OFDM symbol may be 448 µs (at 4k FFT mode for 8MHz bandwidth CATV systems) or 597 µs (at 4k FFT mode for 6MHz bandwidth CATV systems). And, the duration of the active OFDM symbol for 6MHz bandwidth systems may be denoted as 448 x (8/6) µs or 597.33 µs more precisely. Then, in this example, the guard interval value may be 1/128 or 1/64.

In other words, a mapping of the transport streams to PLPs and the transmission system is signalled in the descriptor transmitted in the NIT, and the descriptor includes an identifier of the PLP, an identifier of the transmission system, a tuning frequency of the transmission system, a duration of the active OFDM symbol, and a guard interval fields.

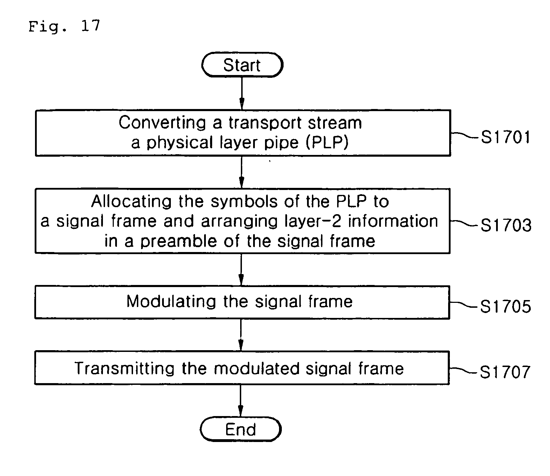

Fig. 17 is a flow chart illustrating a method of transmitting broadcasting signal according to another embodiment of the present invention.

Referring to Fig. 17, a transport stream is converted to a physical layer pipe (PLP) (S1701). Then, the symbols of the PLP are allocated to a signal fame and layer-2 information is arranged in a preamble of the signal frame (S1703). The layer-2 may include a network information table (NIT) having an identifier of a physical layer pipe (PLP_id) and an identifier of a C2 system (C2_system_id) corresponding to the transport stream in the signal frame.

The signal frame is modulated (S1705), for example, by an Orthogonal Frequency Division Multiplexing (OFDM) method, and the modulated signal frame is transmitted (S1707).

In this example of the present invention, a C2 delivery system descriptor (C2dsd) including the identifier of a physical layer pipe (PLP_id) and the identifier of a C2 system (C2_system_id) in a TS loop of the NIT maps the transport stream to the data PLP in a data slice of the C2 system. In the example, PLP related information corresponding to the data slice can be provided via and derived from layer-1 signaling.

That is, as described above, the C2 delivery system descriptor (C2dsd) maps a transport stream being signaled with the NIT, and heading the TS descriptor loop, to the corresponding C2 system (C2_system_id) and the PLP (PLP_id) that carries this transport stream within the C2 system. And, data slice related information in the C2 system is provided via and derived from layer-1 signaling.

As described above, the C2 delivery system descriptor (C2dsd) may comprise the descriptor_tag, descriptor_length, descriptor_tag_extension, plp_id, and C2_system_id fields. The C2 delivery system descriptor (C2dsd) may further comprises a tuning frequency of C2 system, duration of the active OFDM symbol (active_OFDM_symbol_duration), and guard interval (guard_interval) fields.

In this example, the duration of the active OFDM symbol may be 448 µs (at 4k FFT mode for 8MHz bandwidth CATV systems) or 597 µs (at 4k FFT mode for 6MHz bandwidth CATV systems). And, the duration of the active OFDM symbol for 6MHz bandwidth systems may be denoted as 448 x (8/6) µs or 597.33 µs more precisely. Then, in this example, the guard interval value may be 1/128 or 1/64.

In other words, a mapping of the transport streams to PLPs and the transmission system is signalled in the descriptor transmitted in the NIT, and the descriptor includes an identifier of the PLP, an identifier of the transmission system, a tuning frequency of the transmission system, a duration of the active OFDM symbol, and a guard interval fields.

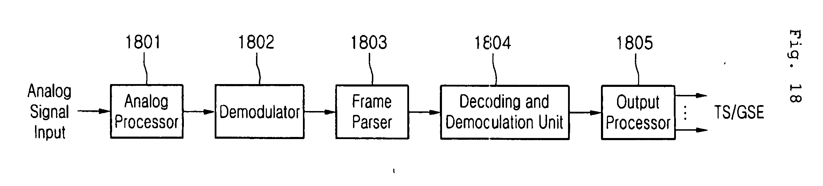

Fig. 18 shows an apparatus for receiving broadcasting signal according to another embodiment of the present invention.

Referring to Fig. 18, the receiver according to this example includes an analog processor 1801, a demodulator 1802, a frame parser 1803, a decoding and demodulation unit 1804, and an output processor 1805.

Received signal is converted into digital signal at the analog processor 1801. The demodulator 1802 converts received signal from the analog processor 1801 into data in frequency domain. That is, the demodulator 1802 may be configured to demodulate received signals including a signal frame, for example, by use of an Orthogonal Frequency Division Multiplexing (OFDM) method, and output the signal frame.

The frame parser 1803 may remove pilots and headers and enable selection of service information that needs to be decoded. That is, the frame parser 1803 may be configured to parse a network information table (NIT) including an identifier of a physical layer pipe (PLP_id) and an identifier of a C2 system (C2_system_id) from layer-2 information of the signal frame, and obtain the PLP in the signal frame corresponding to the PLP_id and C2_system_id.

The decoding and demodulation unit 1804 may correct errors in the transmission channel. The decoding and demodulation unit, for example, a BICM demodulation unit may be configured to obtain a transport stream by converting the PLP. The output processor 1805 may restore the originally transmitted service stream and timing information.

In this example of the present invention, a C2 delivery system descriptor (C2dsd) including the identifier of a physical layer pipe (PLP_id) and the identifier of a C2 system (C2_system_id) in a TS loop of the NIT maps the transport stream to the data PLP in a data slice of the C2 system. In the example PLP related information corresponding to the data slice can be provided via and derived from layer-1 signaling.

That is, as described above, the C2 delivery system descriptor (C2dsd) maps a transport stream being signaled with the NIT, and heading the TS descriptor loop, to the corresponding C2 system (C2_system_id) and the PLP (PLP_id) that carries this transport stream within the C2 system. And, data slice related information in the C2 system is provided via and derived from layer-1 signaling.

As described above, the C2 delivery system descriptor (C2dsd) in the NIT may comprise the descriptor_tag, descriptor_length, descriptor_tag_extension, plp_id, and C2_system_id fields. The C2 delivery system descriptor (C2dsd) may further comprises a tuning frequency of C2 system, duration of the active OFDM symbol (active_OFDM_symbol_duration), and guard interval (guard_interval) fields.

In this example, the duration of the active OFDM symbol may be 448 µs (at 4k FFT mode for 8MHz bandwidth CATV systems) or 597 µs (at 4k FFT mode for 6MHz bandwidth CATV systems). And, the duration of the active OFDM symbol for 6MHz bandwidth systems may be denoted as 448 x (8/6) µs or 597.33 µs more precisely. Then, in this example, the guard interval value may be 1/128 or 1/64.

In other words, a mapping of the transport streams to PLPs and the transmission system is signalled in the descriptor transmitted in the NIT, and the descriptor includes an identifier of the PLP, an identifier of the transmission system, a tuning frequency of the transmission system, a duration of the active OFDM symbol, and a guard interval fields.

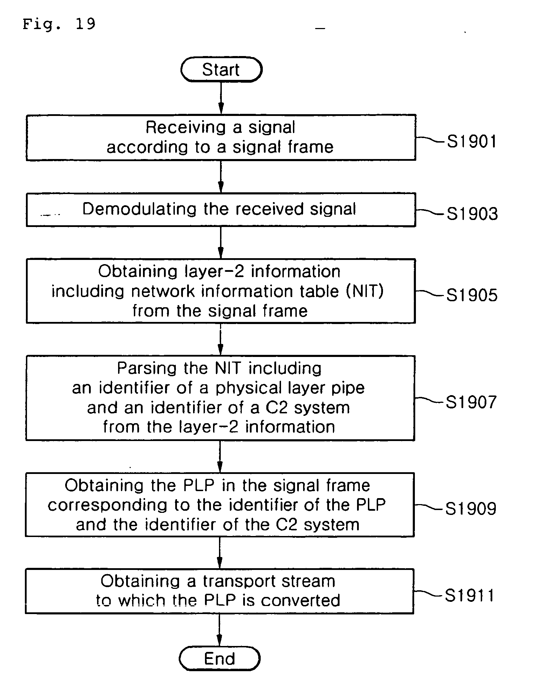

Fig. 19 is a flow chart illustrating a method of receiving broadcasting signal according to another embodiment of the present invention.

Referring to Fig. 19, a signal according to a signal frame is received (S1901). Then the received signal is demodulated (S1903), for example, by use of an Orthogonal Frequency Division Multiplexing (OFDM) method.

The layer-2 information including network information table (NIT) is obtained from the signal frame (S1905), and the NIT including an identifier of an identifier of a physical layer pipe (PLP_id) and an identifier of a C2 system (C2_system_id) is parsed from the layer-2 information of the signal frame (S1907).

The PLP in the signal frame corresponding to the identifier of a physical layer pipe (PLP_id) and identifier of a C2 system (C2_system_id) is obtained (S1909), and a transport stream to which the PLP is converted is obtained (S1911).

In this example of the present invention, a C2 delivery system descriptor (C2dsd) including the identifier of a physical layer pipe (PLP_id) and the identifier of a C2 system (C2_system_id) in a TS loop of the NIT maps the transport stream to the data PLP in a data slice of the C2 system. In the example, PLP related information corresponding to the data slice can be provided via and derived from layer-1 signaling.

That is, as described above, the C2 delivery system descriptor (C2dsd) maps a transport stream being signaled with the NIT, and heading the TS descriptor loop, to the corresponding C2 system (C2_system_id) and the PLP (PLP_id) that carries this transport stream within the C2 system. And, data slice related information in the C2 system is provided via and derived from layer-1 signaling.

As described above, the C2 delivery system descriptor (C2dsd) may comprise the descriptor_tag, descriptor_length, descriptor_tag_extension, plp_id, and C2_system_id fields. The C2 delivery system descriptor (C2dsd) may further comprises a tuning frequency of C2 system, duration of the active OFDM symbol (active_OFDM symbol_duration), and guard interval (guard_interval) fields.

In this example, the duration of the active OFDM symbol may be 448 µs (at 4k FFT mode for 8MHz bandwidth CATV systems) or 597 µs (at 4k FFT mode for 6MHz bandwidth CATV systems). And, the duration of the active OFDM symbol for 6MHz bandwidth systems may be denoted as 448 x (8/6) µs or 597.33 µs more precisely. Then, in this example, the guard interval value may be 1/128 or 1/64.

In other words, a mapping of the transport streams to PLPs and the transmission system is signalled in the descriptor transmitted in the NIT, and the descriptor includes an identifier of the PLP, an identifier of the transmission system, a tuning frequency of the transmission system, a duration of the active OFDM symbol, and a guard interval fields.

As described above, the present invention provides information associated with the data slice and the PLP to the receiver through a PSI/SI signaling scheme in a cable DTV broadcasting scheme using a channel bonding scheme, and thus can include the data slice and the PLP in the network-service-package connection structure of the existing PSI/SI while maximally using the connection structure. The present invention can maximize the applicability of a PSI/SI controller in the existing system.

It will be apparent to those skilled in the art that various modifications and variations can be made in the present invention without departing from the invention.

## Claims

1. A method of receiving a broadcasting signal, the method suitable for:
receiving a signal comprising a signal frame, wherein the signal frame comprises one or more data slices carrying Physical Layer Pipe, PLP, and one or more preamble symbols carrying Layer 1, L1, signaling data for the data slices, and the preamble symbols are divided in frequency direction into at least two L1 blocks of same bandwidth;
obtaining Layer 2, L2, information including network information table, NIT, from the signal frame;
obtaining the NIT including an identifier of a physical layer pipe (PLP_id) and an identifier of a transmission system (transmission_system_id) from the obtained L2 information;
obtaining the PLP corresponding to the identifier of the PLP and the identifier of the transmission system included in the NIT; and
obtaining a transport stream, TS, to which the PLP is mapped,
wherein a transmission delivery system descriptor including the identifier of the PLP, the identifier of the transmission system, and a guard interval fields in a TS loop of the NIT maps transport streams to PLPs in data slices of the transmission systems.

2. The method according to claim 1, wherein a value of the guard interval is one of 1/128 and 1/64.

3. The method according to claim 1 or claim 2, wherein the NIT includes an identifier of a transport stream and an identifier of a network.

4. The method according to any one of claims 1 to 3, wherein the data slices have an arbitrary bandwidth in frequency direction in the signal frame.

5. An apparatus for receiving a broadcasting signal, the apparatus comprising:
means for receiving a signal comprising a signal frame, wherein the signal frame comprises one or more data slices carrying Physical Layer Pipe, PLP, and one or more preamble symbols carrying Layer 1, L1, signaling data for the data slices, and the preamble symbols are divided in frequency direction into at least two L1 blocks of same bandwidth;
means (1803) for obtaining a network information table, NIT, including an identifier of a physical layer pipe (PLP_id) and an identifier of a transmission system (transmission_system_id) from Layer 2, L2, information of the signal frame, and obtaining the PLP corresponding to the identifier of the PLP and the identifier of the transmission system included in the NIT; and
means (1804) for obtaining a transport stream, TS, to which the PLP is mapped,
wherein a transmission delivery system descriptor including the identifier of the PLP, the identifier of the transmission system, and a guard interval fields in a TS loop of the NIT maps transport streams to PLPs in data slices of the transmission systems.

6. The apparatus according to claim 5, wherein a value of the guard interval is one of 1/128 and 1/64.

7. The apparatus according to claim 5 or claim 6, wherein the NIT includes an identifier of a transport stream and an identifier of a network.

8. The apparatus according to any one of claims 5 to 7, wherein the data slices have an arbitrary bandwidth in frequency direction in the signal frame.

9. A method of transmitting a broadcasting signal, the method comprising:
building a signal frame comprising one or more data slices carrying, Physical Layer Pipe, PLP, and one or more preamble symbols carrying Layer 1, L1, signaling data for the data slices, wherein the preamble symbols are divided in frequency direction into at least two L1 blocks of same bandwidth, and the signal frame comprises a layer-2 information including a network information table, NIT, having an identifier of a physical layer pipe (PLP_id) and an identifier of a transmission system (transmission_system_id) corresponding to the transport stream, TS, in the signal frame;
modulating the signal frame by an Orthogonal Frequency Division Multiplexing, OFDM, method; and
transmitting the modulated signal frame,
wherein a transmission delivery system descriptor including the identifier of the PLP, the identifier of the transmission system, and a guard interval field in a TS loop of the NIT maps transport streams to PLPs in data slices of the transmission systems.

10. The method according to claim 9, wherein a value of the guard interval is one of 1/128 and 1/64.

11. The method according to claim 9 or claim 10, wherein the NIT includes an identifier of a transport stream and an identifier of a network.

12. The method according to any one of claims 9 to 11, wherein the data slices have an arbitrary bandwidth in frequency direction in the signal frame.

13. An apparatus for transmitting broadcasting signal, the transmitter comprising:
means (1603) for building a signal frame comprising one or more data slices carrying Physical Layer Pipe, PLP, and one or more preamble symbols carrying Layer 1, L1, signaling data for the data slices, wherein the preamble symbols are divided in frequency direction into at least two L1 blocks of same bandwidth, and the signal frame comprises a
Layer 2, L2, information including a network information table, NIT, having an identifier of a physical layer pipe (PLP_id) and an identifier of a transmission system (transmission_system_id) corresponding to the transport stream, TS, in the signal frame; and
means (1804) for modulating the signal frame by an Orthogonal Frequency Division Multiplexing, OFDM, method,
wherein a transmission delivery system descriptor including the identifier of the PLP, the identifier of the transmission system, and a guard interval field in a TS loop of the NIT maps transport streams to PLPs in data slices of the transmission systems.

14. The apparatus according to claim 13, wherein a value of the guard interval is one of 1/128 and 1/64.

15. The apparatus according to claim 13 or claim 14, wherein the NIT includes an identifier of a transport stream and an identifier of a network.

## Patentansprüche

1. Verfahren zum Empfangen eines Rundfunksignals, wobei das Verfahren geeignet ist, um:
ein Signal zu empfangen, das einen Signalrahmen aufweist, wobei der Signalrahmen aufweist: eine oder mehrere Datenscheiben, die PLP (Physical Layer Pipe) tragen, und ein oder mehrere Präambelsymbole, die Schicht-1-, L1-, Signalisierungsdaten für die Datenscheiben tragen, und wobei die Präambelsymbole in der Frequenzrichtung in wenigstens zwei L1-Blöcke mit der gleichen Bandbreite unterteilt werden;
Schicht-2-, L2-, Informationen einschließlich der Netzwerkinformationstabelle NIT aus dem Signalrahmen zu gewinnen;
die NIT mit einer Kennung einer PLP (PLP_id) und einer Kennung eines Übertragungssystems (transmission_system_id) aus den gewonnenen L2-Informationen zu gewinnen;
die PLP zu gewinnen, die der Kennung der PLP und der Kennung des Übertragungssystems entspricht, die in der NIT enthalten sind; und
einen Transportstrom TS zu gewinnen, auf den die PLP abgebildet wird,
wobei ein Sendungszustellungssystemdeskriptor, der Felder für die Kennung der PLP, die Kennung des Übertragungssystems und ein Schutzintervall in einer TS-Schleife der NIT enthält, Transportströme auf PLPs in Datenscheiben der Übertragungssysteme abbildet.

2. Verfahren nach Anspruch 1, wobei ein Wert des Schutzintervalls 1/128 oder 1/64 ist.

3. Verfahren nach Anspruch 1 oder Anspruch 2, wobei die NIT eine Kennung eines Transportstroms und eine Kennung eines Netzwerks enthält.

4. Verfahren nach einem der Ansprüche 1 bis 3, wobei die Datenscheiben eine beliebige Bandbreite in der Frequenzrichtung in dem Signalrahmen haben.

5. Vorrichtung zum Empfangen eines Rundfunksignals, wobei die Vorrichtung aufweist:
eine Einrichtung zum Empfangen eines Signals, das einen Signalrahmen aufweist, wobei der Signalrahmen aufweist: eine oder mehrere Datenscheiben, die PLP (Physical Layer Pipe) tragen, und ein oder mehrere Präambelsymbole, die Schicht-1-, L1-, Signalisierungsdaten für die Datenscheiben tragen, und wobei die Präambelsymbole in der Frequenzrichtung in wenigstens zwei L1-Blöcke mit der gleichen Bandbreite unterteilt sind;
eine Einrichtung (1803) zum Gewinnen einer Netzwerkinformationstabelle NIT einschließlich einer Kennung einer PLP (PLP_id) und einer Kennung eines Übertragungssystems (transmission_system_id) aus Schicht-2-, L2-, Informationen des Signalrahmens, und zum Gewinnen der PLP, die der Kennung der PLP und der Kennung des Übertragungssystems entspricht, die in der NIT enthalten sind; und
eine Einrichtung (1804) zum Gewinnen eines Transportstroms TS, auf den die PLP abgebildet wird,
wobei ein Sendungszustellungssystemdeskriptor, der Felder für die Kennung der PLP, die Kennung des Übertragungssystems und ein Schutzintervall in einer TS-Schleife der NIT enthält, Transportströme auf PLPs in Datenscheiben der Übertragungssysteme abbildet.

6. Vorrichtung nach Anspruch 5, wobei ein Wert des Schutzintervalls 1/128 oder 1/64 ist.

7. Vorrichtung nach Anspruch 5 oder Anspruch 6, wobei die NIT eine Kennung eines Transportstroms und eine Kennung eines Netzwerks enthält.

8. Vorrichtung nach einem der Ansprüche 5 bis 7, wobei die Datenscheiben eine beliebige Bandbreite in der Frequenzrichtung in dem Signalrahmen haben.

9. Verfahren zum Senden eines Rundfunksignals, wobei das Verfahren aufweist:
Aufbauen eines Signalrahmens, der aufweist: eine oder mehrere Datenscheiben, die PLP (Physical Layer Pipe) tragen und ein oder mehrere Präambelsymbole, die Schicht-1-, L1-, Signalisierungsdaten für die Datenscheiben tragen, und wobei die Präambelsymbole in der Frequenzrichtung in wenigstens zwei L1-Blöcke mit der gleichen Bandbreite unterteilt werden, und wobei der Signalrahmen Schicht-2-, L2-Informationen aufweist, die eine Netzwerkinformationstabelle NIT mit einer Kennung (PLP_id) einer Leitung der physikalischen Schicht und einer Kennung eines Übertragungssystems (transmission_ system_id), die dem Transportstrom in dem Signalrahmen entsprechen, enthalten; und
Modulieren des Signalrahmens durch ein orthogonales Frequenzteilungsmultiplex-, OFDM-, Verfahren; und
Senden des modulierten Signalrahmens,
wobei ein Sendungszustellungssystemdeskriptor, der Felder für die Kennung der PLP, die Kennung des Übertragungssystems und ein Schutzintervall in einer TS-Schleife der NIT enthält, Transportströme auf PLPs in Datenscheiben der Übertragungssysteme abbildet.

10. Verfahren nach Anspruch 9, wobei ein Wert des Schutzintervalls 1/128 oder 1/64 ist.

11. Verfahren nach Anspruch 9 oder Anspruch 10, wobei die NIT eine Kennung eines Transportstroms und eine Kennung eines Netzwerks enthält.

12. Verfahren nach einem der Ansprüche 9 bis 11, wobei die Datenscheiben eine beliebige Bandbreite in der Frequenzrichtung in dem Signalrahmen haben.

13. Vorrichtung zum Senden eines Rundfunksignals, wobei der Sender aufweist:
eine Einrichtung (1603) zum Aufbauen eines Signalrahmens, der aufweist: eine oder mehrere Datenscheiben, die PLP (Physical Layer Pipe) tragen, und ein oder mehrere Präambelsymbole, die Schicht-1-, L1-, Signalisierungsdaten für die Datenscheiben tragen, und wobei die Präambelsymbole in der Frequenzrichtung in wenigstens zwei L1-Blöcke mit der gleichen Bandbreite unterteilt werden, und wobei der Signalrahmen Schicht-2-, L2-Informationen aufweist, die eine Netzwerkinformationstabelle NIT mit einer Kennung einer PLP (PLP_id) und einer Kennung eines Übertragungssystems (transmission_ system_id), die dem Transportstrom TS in dem Signalrahmen entsprechen, enthalten; und
eine Einrichtung (1804) zum Modulieren des Signalrahmens durch ein orthogonales Frequenzteilungsmultiplex-, OFDM-, Verfahren;
wobei ein Sendungszustellungssystemdeskriptor, der Felder für die Kennung der PLP, die Kennung des Übertragungssystems und ein Schutzintervall in einer TS-Schleife der NIT enthält, Transportströme auf PLPs in Datenscheiben der Übertragungssysteme abbildet.

14. Vorrichtung nach Anspruch 13, wobei ein Wert des Schutzintervalls 1/128 oder 1/64 ist.

15. Vorrichtung nach Anspruch 13 oder Anspruch 14, wobei die NIT eine Kennung eines Transportstroms und eine Kennung eines Netzwerks enthält.

## Revendications

1. Procédé de réception d'un signal de diffusion, le procédé étant adapté pour :
recevoir un signal comprenant une trame de signal, dans lequel la trame de signal comprend une ou plusieurs tranches de données portant un canal de couche physique, PLP, et un ou plusieurs symboles de préambule portant des données de signalisation de couche 1, L1, pour les tranches de données, et les symboles de préambule sont divisés dans la direction de la fréquence en au moins deux blocs L1 de largeur de bande identique ;
obtenir des informations de couche 2, L2, comprenant une table d'informations de réseau, NIT, à partir de la trame de signal ;
obtenir la NIT comprenant un identifiant d'un canal de couche physique (PLP_id) et un identifiant d'un système de transmission (transmission_system_id) à partir des informations L2 obtenues ;
obtenir le PLP correspondant à l'identifiant du PLP et l'identifiant du système de transmission inclus dans la NIT ; et
obtenir un flux de transport, TS, sur lequel le PLP est mappé,
dans lequel un descripteur de système de distribution de transmission comprenant l'identifiant du PLP, l'identifiant du système de transmission, et un champ d'intervalle de garde dans une boucle de TS de la NIT mappe des flux de transport sur des PLPs dans des tranches de données des systèmes de transmission.

2. Procédé selon la revendication 1, dans lequel une valeur de l'intervalle de garde est une parmi 1/128 et 1/64.

3. Procédé selon la revendication 1 ou la revendication 2, dans lequel la NIT comprend un identifiant d'un flux de transport et un identifiant d'un réseau.

4. Procédé selon une quelconque des revendications 1 à 3, dans lequel les tranches de données possèdent une largeur de bande arbitraire dans la direction de la fréquence dans la trame de signal.

5. Appareil pour recevoir un signal de diffusion, l'appareil comprenant :
un moyen pour recevoir un signal comprenant une trame de signal,
dans lequel la trame de signal comprend une ou plusieurs tranches de données portant un canal de couche physique, PLP, et un ou plusieurs symboles de préambule portant des données de signalisation de couche 1, L1, pour les tranches de données,
et les symboles de préambule sont divisés dans la direction de la fréquence en au moins deux blocs L1 de largeur de bande identique ;
un moyen (1803) pour obtenir une table d'informations de réseau, NIT, comprenant un identifiant d'un tuyau de couche physique (PLP_id) et un identifiant d'un système de transmission (transmission_system_id) à partir d'informations de couche 2, L2, de la trame de signal, et obtenir le PLP correspondant à l'identifiant du PLP et l'identifiant du système de transmission inclus dans la NIT ; et
un moyen (1804) pour obtenir un flux de transport, TS, sur lequel le PLP est mappé, dans lequel un descripteur de système de distribution de transmission comprenant l'identifiant du PLP, l'identifiant du système de transmission, et un champ d'intervalle de garde dans une boucle de TS de la NIT mappe des flux de transport sur des PLPs dans des tranches de données des systèmes de transmission.

6. Appareil selon la revendication 5, dans lequel une valeur de l'intervalle de garde est une parmi 1/128 et 1/64.

7. Appareil selon la revendication 5 ou la revendication 6, dans lequel la NIT comprend un identifiant d'un flux de transport et un identifiant d'un réseau.

8. Appareil selon une quelconque des revendications 5 à 7, dans lequel les tranches de données possèdent une largeur de bande arbitraire dans la direction de la fréquence dans la trame de signal.

9. Procédé de transmission d'un signal de diffusion, le procédé comprenant les étapes consistant à :
construire une trame de signal comprenant une ou plusieurs tranches de données portant un canal de couche physique, PLP, et un ou plusieurs symboles de préambule portant des données de signalisation de couche 1, L1, pour les tranches de données, dans lequel les symboles de préambule sont divisés dans la direction de la fréquence en au moins deux blocs L1 de largeur de bande identique, et la trame de signal comprend des informations de couche 2 comprenant une table d'informations de réseau, NIT, possédant un identifiant d'un tuyau de couche physique (PLP_id) et un identifiant d'un système de transmission (transmission_system_id) correspondant au flux de transport, TS, dans la trame de signal ;
moduler la trame de signal par l'intermédiaire d'un procédé de multiplexage par répartition orthogonale de la fréquence, OFDM ; et
transmettre la trame de signal modulée,
dans lequel un descripteur de système de distribution de transmission comprenant l'identifiant du PLP, l'identifiant du système de transmission, et un champ d'intervalle de garde dans une boucle de TS de la NIT mappe des flux de transport sur des PLPs dans des tranches de données des systèmes de transmission.

10. Procédé selon la revendication 9, dans lequel une valeur de l'intervalle de garde est une parmi 1/128 et 1/64.

11. Procédé selon la revendication 9 ou la revendication 10, dans lequel la NIT comprend un identifiant d'un flux de transport et un identifiant d'un réseau.

12. Procédé selon une quelconque des revendications 9 à 11, dans lequel les tranches de données possèdent une largeur de bande arbitraire dans la direction de la fréquence dans la trame de signal.

13. Appareil de transmission de signal de diffusion, le transmetteur comprenant :
un moyen (1603) pour construire une trame de signal comprenant une ou plusieurs tranches de données portant un canal de couche physique, PLP, et un ou plusieurs symboles de préambule portant des données de signalisation de couche 1, L1, pour les tranches de données, dans lequel les symboles de préambule sont divisés dans la direction de la fréquence en au moins deux blocs L1 de largeur de bande identique, et la trame de signal comprend des informations de couche 2, L2, comprenant une table d'informations de réseau, NIT, possédant un identifiant d'un tuyau de couche physique (PLP_id) et un identifiant d'un système de transmission (transmission_system_id) correspondant au flux de transport, TS, dans la trame de signal ; et
un moyen (1804) pour moduler la trame de signal par l'intermédiaire d'un procédé de multiplexage par répartition orthogonale de la fréquence, OFDM,
dans lequel un descripteur de système de distribution de transmission comprenant l'identifiant du PLP, l'identifiant du système de transmission, et un champ d'intervalle de garde dans une boucle de TS de la NIT mappe des flux de transport sur des PLPs dans des tranches de données des systèmes de transmission.

14. Appareil selon la revendication 13, dans lequel une valeur de l'intervalle de garde est une parmi 1/128 et 1/64.

15. Appareil selon la revendication 13 ou la revendication 14, dans lequel la NIT comprend un identifiant d'un flux de transport et un identifiant d'un réseau.
